(19) Europäisches Patentamt
European Patent Office
Office européen des brevets

(11) Veröffentlichungsnummer: **0 144 743**
**B1**

(12) # EUROPÄISCHE PATENTSCHRIFT

(45) Veröffentlichungstag der Patentschrift: **07.01.88**

(51) Int. Cl.[4]: **C 07 F 9/52**

(21) Anmeldenummer: **84113230.1**

(22) Anmeldetag: **03.11.84**

(54) **Verfahren zur Herstellung organischer Chlorphosphane.**

(30) Priorität: **12.11.83 DE 3340995**

(43) Veröffentlichungstag der Anmeldung: **19.06.85 Patentblatt 85/25**

(45) Bekanntmachung des Hinweises auf die Patenterteilung: **07.01.88 Patentblatt 88/1**

(84) Benannte Vertragsstaaten: **BE CH DE FR GB IT LI NL**

(56) Entgegenhaltungen:
**DE - A - 3 313 921**
**SU - A - 362 026**

**HOUBEN-WEYL "Organische Phosphorverbindungen I" 4. Auflage, 1982 GEORG THIEME VERLAG STUTTGART, New York, Band E1, Seiten 250,283**
**HOUBEN-WEYL "Methoden der organischen Chemie", 4. Auflage; Band XII/1, 1963 GEORG THIEME VERLAG, Stuttgart, Seiten 202, 307**
**BULLETIN OF ACADEMY OF SCIENCES OF USSR, Band 28, Nr. 2, Teil 2, Februar 1979, New York, USA; E.N. TSVETKOV et al. "New Reactions involving phosphorus-phosphorus bond cleavage in tetraalkyldiphosiphine disulfides", Seite 396**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr.-Ing., Altkönigstrasse 11a, D-6242 Kronberg/Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 144 743 B1**

**Beschreibung**

Organische Chlorphosphane sind Verbindungen der allgemeinen Formeln

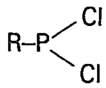

und

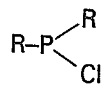

worin R = organischer Rest.

Sie sind hauptsächlich Zwischenprodukte auf verschiedenen Sachgebieten wie dem Pharma-, Pflanzenschutz-, Farbstoff- und Polymeren-Sektor.

Zu ihrer Herstellung ist eine Reihe verschiedener Methoden bekannt. Speziell aliphatische Chlorphosphane – insbesondere Methyl-dichlorphosphan – können z.B. hergestellt werden nach der in dem SU-Urheberschein Nr. 362026 beschriebenen Methode; die Methode besteht in der Umsetzung (Desoxygenierung) von Methylphosphonsäuredichlorid mit einem aliphatischen Phosphan – genannt sind speziell Tri-n-butylphosphan $(n\text{-}C_4H_9)_3P$ und Tri-i-amylphosphan $(i\text{-}C_5H_{11})_3P$ – im Molverhältnis 1:1 bei Temperaturen zwischen 175 und 220 °C. Der Umsetzung liegt die folgende Reaktionsgleichung zugrunde:

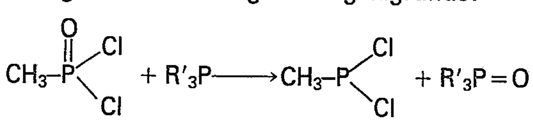

| | | | |
|---|---|---|---|
| Methyl-phosphon-säure-dichlorid | Trialkyl-phosphan | Methyl-dichlor-phosphan | Trialkyl-phosphan-oxid |

(R′ = aliphatischer Rest).

Die mitgeteilten Ausbeuten für das Methyldichlorphosphan liegen bei etwa 60% d.Th., diejenigen für das Trialkylphosphanoxid zwischen etwa 80 und 90% d.Th.

Es wurde auch bereits vorgeschlagen EP-A-0122587, das Trialkylphosphan in der Reaktion gemäss dem vorerwähnten SU-Urheberschein durch das (aromatische) Triphenylphosphan $(C_6H_5)_3P$ zu ersetzen. Die dabei erhaltenen Ausbeuten an Alkyldichlorphosphan liegen jedoch unter 30% d.Th. und sind damit für praktische Bedürfnisse nicht ausreichend. Hohe Chlorphosphan-Ausbeuten (meist zwischen etwa 75 und 100% d.Th.) werden nach dem Verfahren der EP-A-0122587 jedoch dann erhalten, wenn man nicht von einem aliphatischen Phosphonsäuredichlorid (wie nach dem Verfahren des vorerwähnten SU-Urheberscheins), sondern von organischen Phosphor-oxychloriden der Formel

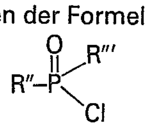

worin R″ = aromatischer oder heterocyclischer Rest, und R‴ = aliphatischer Rest oder Cl, ausgeht und diese mit Triphenylphosphan umsetzt. Die Reaktionstemperaturen liegen dabei zweckmässig zwischen etwa 100 und etwa 350 °C, vorzugsweise zwischen etwa 170 und 250 °C.

In weiterer Ausbildung der Reaktion von Phosphon- und Phosphinsäurechloriden mit organischen Phosphanen wurde nun gefunden, dass sich aromatische und heterocyclische Phosphonsäurechloride sowie aromatisch-aliphatische, heterocyclisch-aliphatische und rein aliphatische Phosphinsäurechloride mit aliphatischen Phosphanen bei Temperaturen unterhalb derjenigen gemäss dem SU-Urheberschein Nr. 362026 mit hohen Ausbeuten zu den gewünschten Chlorphosphanen (und Phosphanoxiden) umsetzen lassen.

Erfindungsgegenstand ist daher ein Verfahren zur Herstellung organischer Chlorphosphane durch Umsetzung organischer Phosphoroxychloride mit einem organischen Phosphan bei einer Temperatur von mindestens 20 °C, das dadurch gekennzeichnet ist, dass man als organische Phosphoroxychloride Verbindungen der Formel I (s. Anspruch 1), worin bedeuten $R^1$ Cl oder einen aliphatischen Rest mit 1 bis 6 C-Atomen und $R^2$ dann, wenn $R^1$ Cl ist, einen Phenyl- oder Thienylrest und wenn $R^1$ ein aliphatischer Rest ist, einen Phenyl- oder Thienyl- oder aliphatischen Rest mit 1 bis 6 C-Atomen, wobei der Phenyl- und Thienylrest unsubstituiert oder durch wenigstens eine inerte Gruppe substituiert ist, die bei der Umsetzung nicht reagiert, und als organisches Phosphan ein Trialkylphosphan der Formel $(R^3)_3P$ (II), worin $R^3$ ein aliphatischer Rest mit bis zu 10 C-Atomen ist, verwendet.

Die Reaktionstemperaturen liegen im allgemeinen zwischen 20 und 170 °C, vorzugsweise zwischen 60 und 150 °C, insbesondere zwischen 80 und 130 °C.

Durch diese Umsetzung werden aromatische und heterocyclische Dichlorphosphane sowie aromatisch-aliphatische, heterocyclisch-aliphatische und rein aliphatische Monochlorphosphane in Ausbeuten durchweg zwischen etwa 70 und 100% d.Th. erhalten nach der Reaktionsgleichung:

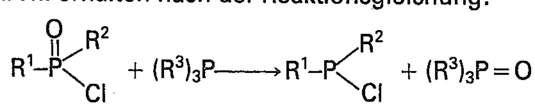

| | | | |
|---|---|---|---|
| (I) | (II) | Chlorphosphan (III) | Trialkylphosphanoxid (IV) |

Das Gelingen und der glatte Verlauf dieser Umsetzung in dem angegebenen Temperaturbereich waren ausserordentlich überraschend, weil bei der Umsetzung rein aliphatischer Phosphonsäuredichloride mit aliphatischen Phosphanen nach dem Verfahren des SU-Urheberscheins Nr. 362026 bei höheren Temperaturen (175 bis 220 °C) niedrigere Ausbeuten an Alkyldichlorphosphan (nur etwa 60%) erhalten werden.

In Formel I ist $R^1$ vorzugsweise Cl. Wenn $R^1$ ein aliphatischer Rest ist, ist dies bevorzugt der $CH_3$- oder $C_2H_5$-Rest.

Die Phenyl- und Thienylreste können unsubstituiert oder durch inerte Gruppen substituiert sein. Inerte Gruppen sind Gruppen, welche bei der hier stattfindenden Umsetzung nicht reagieren. Bevorzugte derartige inerte Gruppen sind hier Alkylgruppen, Halogenalkyl- und Halogengruppen, insbesondere $C_1$–$C_6$-Alkylgruppen (vor allem $CH_3$ und $C_2H_5$), $CF_3$ und Cl. Sowohl der Phenyl- als auch der Thienylrest können ein- oder mehrfach substituiert sein; bevorzugt ist der Phenylrest ein- oder zweifach substituiert und der Thienylrest unsubstituiert.

Als aliphatische Reste kommen für $R^2$ im Prinzip die gleichen Reste in Frage wie für $R^1$, wobei auch für $R^2$ insbesondere $CH_3$ und $C_2H_5$ bevorzugt sind.

Wenn in Formel I $R^1$ = Cl, sind die Verbindungen Phosphonsäuredichloride wie z.B. Phenylphosphonsäuredichlorid, Tolylphosphonsäuredichloride, Xylylphosphonsäuredichloride, 3-Trifluormethylphenylphosphonsäuredichlorid, 4-Chlorphenylphosphonsäuredichlorid, Thienylphosphonsäuredichlorid. Die Herstellung dieser Verbindungen geschieht nach bekannten Verfahren. So ist z.B. Phenylphosphonsäuredichlorid $C_6H_5P(O)Cl_2$ u.a. durch Phosgenierung von Phenylphosphonsäurediestern $C_6H_5P(O)(OR)_2$, worin R = organischer Rest, erhältlich; Phenylphosphonsäurediester sind ihrerseits z.B. durch Umsetzung von Brombenzol mit Trialkylphosphiten in Gegenwart von Nickelbromid zugänglich.

Wenn $R^1$ = aliphatischer Rest, sind die Verbindungen der Formel I aromatisch-aliphatische, heterocyclisch-aliphatische oder rein aliphatische Phosphinsäurechloride wie z.B. Phenyl-methyl-phosphinsäurechlorid, Tolyl-methyl-phosphinsäurechlorid, Phenyl-ethyl-phosphinsäurechlorid, Thienyl-methyl-phosphinsäurechlorid, Dimethylphosphinsäurechlorid, Ethyl-methyl-phosphinsäurechlorid, Methyl-propyl-phosphinsäurechlorid, Diethylphosphinsäurechlorid. Auch diese Verbindungen sind nach bekannten Methoden zugänglich.

In den Trialkylphosphanen der Formel II ist der aliphatische Rest $R^3$ ein Alkylrest mit bis zu 10 C-Atomen, insbesondere ein solcher mit 4 bis 8 C-Atomen. Beispielhafte Trialkylphosphane der Formel II sind Triethylphosphan, Tributylphosphan, Trihexylphosphan und Trioctylphosphan.

Die organischen Phosphoroxychloride der Formel I und das Trialkylphosphan der Formel II werden normalerweise im (stöchiometrischen) Molverhältnis 1:1 eingesetzt. Auch andere Molverhältnisse sind jedoch denkbar. So kann auch das Trialkylphosphan II im Überschuss eingesetzt werden; der Überschuss bleibt bei der Reaktion dann unumgesetzt. Die Gegenwart inerter Lösungs- und Verdünnungsmittel ist möglich, bringt aber im allgemeinen keine besonderen Vorteile.

Normalerweise wird die Umsetzung bei Atmosphärendruck durchgeführt; auch die Anwendung von Überdruck ist jedoch möglich und kann in bestimmten Fällen geboten sein.

Zur Durchführung der Reaktion werden die organischen Phosphoroxychloride I mit dem Trialkylphosphan II unter Inertgasatmosphäre (z.B. Stickstoff) gemischt. Eine langsame Zudosierung der Komponenten zueinander kann insbesondere dann geboten sein, wenn die Reaktion exotherm verläuft. Nach der Mischung der Komponenten wird weiterhin unter Inertgasatmosphäre für eine bestimmte Zeit auf Reaktionstemperatur gehalten; die Reaktionsdauer beträgt durchschnittlich 1 bis 10 Stunden.

Nach beendeter Umsetzung werden die gebildeten Chlorphosphane III – d.i. Dichlorphosphane (aus Phosphonsäuredichloriden I) oder Monochlorphosphane (aus Phosphinsäurechloriden I) – zweckmässig destillativ gewonnen und dadurch von den Trialkylphosphanoxiden IV abgetrennt. Die in roher Form anfallenden Trialkylphosphanoxide IV können ebenfalls durch Destillation gewonnen werden. Da die gebildeten Chlorphosphane III praktisch nur als Zwischenprodukte interessant sind, können sie gegebenenfalls im anfallenden Reaktionsgemisch auch direkt weiterverarbeitet werden.

Beispielsweise können die anfallenden Reaktionsgemische von aromatischen Dichlorphosphanen (in Formel III $R^1$ = Cl und $R^2$ = aromatischer Rest) und Trialkylphosphanoxid IV bei etwa 90 °C in überschüssiges Wasser getropft werden. Dabei entstehen die aromatischen phosphonigen Säuren

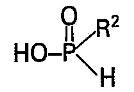
($R^2$ = aromat. Rest),

die zusammen mit dem Trialkylphosphanoxid IV eine Phase bilden, während die wässrige Phase den Hauptteil des gebildeten Chlorwasserstoffs enthält. Nach Entfernung dieser Phase wird die organische Phase mit wässriger Natronlauge neutralisiert. Man erhält dann das Natriumsalz der phosphonigen Säure in wässriger Lösung und das Trialkylphosphanoxid IV als organische Phase.

Durch das erfindungsgemässe Verfahren können Chlorphosphane mit einem an den Phosphor gebundenen aromatischen oder heterocyclischen – sowie gegebenenfalls auch noch einem aliphatischen – Rest aus organischen Phosphoroxychloriden durch Reaktion mit einem aliphatischen Phosphan in (gegenüber dem Verfahren des SU-Urheberscheins Nr. 362062) durchweg höheren Ausbeuten bei niedrigerer Temperatur erhalten werden. Die Erfindung stellt daher eine fortschrittliche Weiterentwicklung dar.

Die folgenden Beispiele sollen nun der weiteren Erläuterung der Erfindung dienen.

Beispiel 1

In 95 g (0.257 mol) Trioctylphosphan werden unter Rühren und unter Stickstoffatmosphäre 50 g (0,257 mol) Phenylphosphonsäuredichlorid eingetropft. Die Temperatur steigt dabei auf 50 °C. Anschliessend wird 1 Stunde bei 100 °C gehalten und dann destilliert. Man erhält bei einer Übergangstemperatur von 75 °C bei 0,43 kPa 32 g Dichlorphenyl-phosphan (entsprechend Ausbeuten von 70% d.Th.) sowie bei 0,067 kPa und einer Übergangstemperatur von 220 °C 89 g Trioctylphosphanoxid (entsprechend Ausbeuten von 90% d.Th.).

Beispiel 2

In 50 g (0,248 mol) Tributylphosphan werden während 45 Minuten unter Rühren und unter

Stickstoffatmosphäre 48,3 g (0,248 mol) Phenylphosphonsäuredichlorid eingetropft. Die Temperatur steigt auf 40 °C an. Dann wird kurz auf 100 °C erhitzt und anschliessend destilliert. Man erhält 32 g Dichlor-phenyl-phosphan (73% d. Th.) sowie bei 0,027 kPa und einer Übergangstemperatur von 115 °C 47,5 g Tributylphosphanoxid (entsprechend Ausbeuten von 90% d. Th.).

Beispiel 3

In 64,5 g (0,175 mol) Trioctylphosphan werden 40 g (0,175 mol) p-Chlorphenylphosphonsäuredichlorid schnell unter Rühren und Stickstoffatmosphäre eingetropft. Die Temperatur steigt bis 60 °C an. Dann wird eine Stunde bei 100 °C gehalten. Nach dem Abkühlen wird der Ansatz mit 45 ml Methylenchlorid versetzt. Es wird gerührt und von 3 g eines Festkörpers abgesaugt. Das Filtrat wird im Vakuum vom Methylenchlorid befreit und bei ca. 0,1333 kPa destilliert bis zu einer Innentemperatur von 240 °C. Man erhält 30 g p-Chlorphenyl-dichlor-phosphan. Das entspricht einer Ausbeute von 84% d. Th. Der Rückstand wird bei 0,067 kPa und einer Übergangstemperatur von 220 °C destilliert. Man erhält ca. 63 g reines Trioctylphosphanoxid (Fp.: 47–50 °C) (ca. 95% d. Th.).

Beispiel 4

84,5 g (0,228 mol) Trioctylphosphan und 43 g (0,228 mol) Methyl-p-tolyl-phosphinsäurechlorid werden unter Rühren und unter Stickstoffatmosphäre vermischt. Es bilden sich zwei Phasen. Nun wird erhitzt unter Rühren. Ab 110 °C ist die Reaktionsmischung homogen. Dann wird 5 Stunden bei 130 °C gehalten. Anschliessend werden bei 0,053 kPa und einer Übergangstemperatur von 70 °C 31,5 g Chlormethyl-p-tolyl-phosphan abdestilliert. Der Rückstand erstarrt und stellt rohes Trioctylphosphanoxid dar. Die Ausbeute beträgt 80% d. Th.

Beispiel 5

In 52 g (0,141 mol) Trioctylphosphan werden unter Rühren und Stickstoffatmosphäre 24,4 g (0,117 mol) p-Tolylphosphonsäuredichlorid schnell eingetropft. Die Temperatur steigt dabei auf 50 °C. Dann wird auf 100 °C geheizt und 30 Min. bei dieser Temperatur unter Rühren gehalten. Anschliessend werden bei ca. 0,08 kPa und einer übergangstemperatur von 70 °C 18,5 g Dichlor-p-tolyl-phosphan (entsprechend Ausbeuten von 82% d. Th.) abdestilliert. Der Rückstand stellt ein rohes Gemisch von Trioctylphosphan und Trioctylphosphanoxid dar.

Beispiel 6

147 g (0,396 mol) Trioctylphosphan und 50 g (0,396 mol) Ethylmethylphosphinsäurechlorid werden unter Rühren und unter Stickstoffatmosphäre vermischt. Dann wird 8 Stunden bei 150 °C gehalten. Anschliessend werden bei 50 °C und ca. 0,4 kPa 27 g Chlor-ehtly-methyl-phosphan abdestilliert und in einer der Destillationsapparatur nachgeschalteten Kühlfalle kondensiert. Anschliessend werden bei 0,27 kPa und einer Übergangstemperatur von ca. 70 °C 20 g Ethyl-methylphosphinsäurechlorid abdestilliert. Bei einem Umsatz von 60% d. Th. beträgt die Ausbeute an Chlor-ethyl-methylphosphan 85% d. Th.

Der Rückstand erstarrt und stellt rohes Trioctylphosphanoxid dar.

Beispiel 7

In 106 g (0,287 mol) Trioctylphosphan werden unter Rühren und unter Stickstoffatmosphäre 50 g (0,22 mol) 3-Fluor-6-methyl-phenyl-phosphinsäuredichlorid eingetropft. Anschliessend wird ca. 1 Stunde bei 110–120 °C gehalten. Dann wird destilliert. Man erhält bei einer Übergangstemperatur von 74 °C bei ca. 0,15 kPa 44 g Dichlor-3-fluor-6-methyl-phenyl-phosphan (95% d. Th.).

**Patentansprüche**

1. Verfahren zur Herstellung organischer Chlorphosphane durch Umsetzung organischer Phosphoroxychloride mit einem organischen Phosphan bei einer Temperatur von mindestens 20 °C, dadurch gekennzeichnet, dass man als organische Phosphoroxychloride Verbindungen der Formel

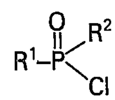 (I)

worin bedeuten $R^1$ Cl oder einen aliphatischen Rest mit 1 bis 6 C-Atomen und $R^2$ dann, wenn $R^1$ Cl ist, einen Phenyl- oder Thienylrest und wenn $R^1$ ein aliphatischer Rest ist, einen Phenyl- oder Thienyl- oder aliphatischen Rest mit 1 bis 6 C-Atomen, wobei der Phenyl- und Thienylrest unsubstituiert oder durch wenigstens eine inerte Gruppe substituiert ist, die bei der Umsetzung nicht reagiert, und als organisches Phosphan ein Trialkylphosphan der Formel $(R^3)_3P$ (II), worin $R^3$ ein aliphatischer Rest mit bis zu 10 C-Atomen ist, verwendet.

2. Verfahren nach Anspruch 1, dadurch gekennzeichnet, dass man die Umsetzung bei einer Temperatur bis etwa 170 °C durchführt.

3. Verfahren nach Anspruch 2, dadurch gekennzeichnet, dass man die Umsetzung zwischen 60 und 150 °C, insbesondere zwischen 80 und 130 °C durchführt.

4. Verfahren nach einem oder mehreren der Ansprüche 1 bis 3, dadurch gekennzeichnet, dass in den Verbindungen der Formel I der aliphatische Rest sowohl für $R^1$ als auch für $R^2$ $CH_3$ oder $C_2H_5$ ist.

5. Verfahren nach einem oder mehreren der Ansprüche 1 bis 4, dadurch gekennzeichnet, dass der Phenylrest für $R^2$ bis zu 2 inerte Gruppen aufweist.

6. Verfahren nach einem oder mehreren der Ansprüche 1 bis 4, dadurch gekennzeichnet, dass der Thienylrest unsubstituiert ist.

7. Verfahren nach einem oder mehreren der Ansprüche 1 bis 5, dadurch gekennzeichnet, dass die inerte Gruppe wenigstens ein Rest aus der Gruppe Alkyl mit 1 bis 6 C-Atomen, Halogenalkyl und Halogen ist.

8. Verfahren nach einem oder mehreren der Ansprüche 1 bis 7, dadurch gekennzeichnet, dass die inerte Gruppe Methyl, Äthyl, $CF_3$ oder Halogen mit einer Ordnungszahl von 9 bis 17 ist.

9. Verfahren nach einem oder mehreren der Ansprüche 1 bis 8, dadurch gekennzeichnet, dass $R^1$ Cl ist.

10. Verfahren nach einem oder mehreren der Ansprüche 1 bis 9, dadurch gekennzeichnet, dass $R^3$ in Formel II ein $C_4$–$C_8$-Alkylrest ist.

**Claims**

1. Process for preparing organic chlorophosphanes by reacting organic phosphorus oxychlorides with an organic phosphane at a temperature of at least 20 °C, characterized in that there are used as organic phosphorus oxychloride compounds of the formula I

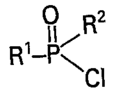 (I)

wherein represent $R^1$ chlorine or an aliphatic group having 1 to 6 carbon atoms and $R^2$ a phenyl or thienyl group in the event that $R^1$ is chlorine, and a phenyl, thienyl or aliphatic group having 1 to 6 carbon atoms in the event that $R^1$ is an aliphatic radical, the phenyl and thienyl group being unsubstituted or substituted by at least one inert group which does not react i the reaction, and as the organic phosphane a trialkylphosphane of the formula II $(R^3)_3P$ in which $R^3$ is an aliphatic radical having up to 10 carbon atoms.

2. Process as claimed in claim 1, characterized in that the reaction is carried out at a temperature of up to about 170 °C.

3. Process as claimed in claim 2, characterized in that the reaction is carried out in the range between 60 and 150 °C, in particular between 80 and 130 °C.

4. Process as claimed in one or more of claims 1 to 3, characterized in that the aliphatic group in the compounds of formula I represents $CH_3$ or $C_2H_5$ as well for $R^1$ as for $R^2$.

5. Process as claimed in one or more of claims 1 to 4, characterized in that the phenyl group of $R^2$ contains up to 2 inert groups.

6. Process as claimed in one or more of claims 1 to 4, characterized in that the thienyl group is unsubstituted.

7. Process as claimed in one or more of claims 1 to 5, characterized in that the inert group represents at least one radical selected from the group consisting of alkyl having 1 to 6 carbon atoms, halogen alkyl and halogen.

8. Process as claimed in one or more of claims 1 to 7, characterized in that the inert group is methyl, ethyl, $CF_3$ or halogen having an atomic number of from 9 to 17.

9. Process as claimed in one or more of claims 1 to 8, characterized in that $R^1$ represents Cl.

10. Process as claimed in one or more of claims 1 to 9, characterized in that $R^3$ in formula II is a $C_4$–$C_8$-alkyl group.

**Revendications**

1. Procédé pour préparer des chlorophosphines organiques par réaction d'oxychlorures de phosphore organiques avec une phosphine organique, à une température d'au moins 20 °C, procédé caractérisé en ce qu'on utilise, comme oxychlorures de phosphore organiques, des composés répondant à la formule I:

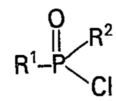 (I)

dans laquelle $R^1$ représente Cl ou un radical aliphatique contenant de 1 à 6 atomes de carbone et $R^2$ représente lorsque $R^1$ désigne Cl un radical phényle ou thiényle et lorsque $R^1$ représente un radical aliphatique un radical phényle, un radical thiényle ou un radical aliphatique contenant de 1 à 6 atomes de carbone, le radical phényle et le radical thiényle étant dépourvus de substituants ou portant un ou plusieurs radicaux inertes qui ne réagissent pas au cours de la réaction, et, comme phosphine organique, une trialkyl-phosphine répondant à la formule II $(R^3)_3P$ dans laquelle $R_3$ représente un radical aliphatique contenant au maximum 10 atomes de carbone.

2. Procédé selon la revendication 1 caractérisé en ce qu'on effectue la réaction à une température d'au plus environ 170 °C.

3. Procédé selon la revendication 2 caractérisé en ce qu'on effectue la réaction à une température comprise entre 60 et 150 °C, plus particulièrement entre 80 et 130 °C.

4. Procédé selon l'une quelconque des revendications 1 à 3, caractérisé en ce que, dans les composés de formule I, le radical aliphatique, qu'il s'agisse de $R^1$ ou de $R^2$, est un radical $-CH_3$ ou $-C_2H_5$.

5. Procédé selon l'une quelconque des revendications 1 à 4, caractérisé en ce que le radical phényle $R^2$ porte au plus deux radicaux inertes.

6. Procédé selon l'une quelconque des revendications 1 à 4, caractérisé en ce que le radical thiényle ne porte pas de substituants.

7. Procédé selon l'une quelconque des revendications 1 à 5, caractérisé en ce qu'il y a au moins un radical inerte pris dans l'ensemble constitué par les alkyles contenant de 1 à 6 atomes de carbone, les halogéno-alkyles et les halogènes.

8. Procédé selon l'une quelconque des revendications 1 à 7, caractérisé en ce que le radical inerte est un radical méthyle, éthyle ou $-CF_3$ ou un halogène dont le numéro atomique peut aller de 9 à 17.

9. Procédé selon l'une quelconque des revendications 1 à 8, caractérisé en ce que $R^1$ représente Cl.

10. Procédé selon l'une quelconque des revendications 1 à 9, caractérisé en ce que $R^3$, dans la formule II, représente un radical alkyle contenant de 4 à 8 atomes de carbone.